# EUROPÄISCHE PATENTSCHRIFT

(11) **EP 2 218 569 B1**
(45) Veröffentlichungstag und Bekanntmachung des Hinweises auf die Patenterteilung: **04.12.2019**
(21) Anmeldenummer: 10153138.2
(22) Anmeldetag: 10.02.2010
(51) Int. Cl.: B29C 49/56

(54) **Vorrichtung zum Herstellen von Kunststoffbehältnissen**
Device for producing plastic containers
Dispositif de fabrication de récipients en plastique

(30) Priorität: 12.02.2009 DE 102009008632
(43) Veröffentlichungstag der Anmeldung: 18.08.2010
(73) Patentinhaber: Krones AG, 93073 Neutraubling (DE)
(72) Erfinder: Schmid, Florian, 93073 Neutraubling (DE); Winzinger, Frank, 93073 Neutraubling (DE); Wittmann, Christian, 93073 Neutraubling (DE)
(74) Vertreter: Bittner, Bernhard

(56) Entgegenhaltungen:
- EP-A1- 0 030 729
- EP-A1- 0 456 866
- DE-A1-102004 045 405
- FR-A1- 2 876 942
- JP-A- S60 234 824
- JP-A- S60 234 825
- US-A- 3 195 186
- US-A- 3 694 124
- US-A- 3 753 641
- US-B1- 6 929 462

## Beschreibung

Die vorliegende Erfindung bezieht sich auf eine Vorrichtung zum Herstellen von Kunststoffbehältnissen und genauer auf eine Vorrichtung zum Umformen von Kunststoffvorformlingen zu Kunststoffbehältnissen. Derartige Vorrichtungen sind aus dem Stand der Technik seit längerem bekannt. Dabei ist es üblich, Kunststoffvorformlinge, meist aus PET, im Rahmen eines Blasvorgangs zu Kunststoffbehältnissen zu expandieren. Zu diesem Zweck wird der Kunststoffvorformling in eine Blasform eingebracht und gegen eine Innenwandung dieser Blasform expandiert.

Dabei werden üblicherweise um den Vorformling Seitenteile bzw. Formteile geschlossen und die Blasform auch durch Hinzufügen eines Bodenteils nach unten hin abgeschlossen. Anschließend beginnt die Beaufschlagung mit Druckluft und auf diese Weise die Expansion des Vorformlings. Im Stand der Technik werden dabei üblicherweise für die einzelnen Teilbewegungen, d. h. zum Bewegen der Formteile oder auch zur Bewegung des Bodenteils unterschiedliche Führungskurven verwendet. Aus diesem Grunde weisen derartige Maschinen teilweise vier oder mehr Führungskurven allein zum Schließen einer betreffenden Blasform auf. Weiterhin ist es erforderlich, eine bereits geschlossene Blasform während des eigentlichen Expansionsvorgangs zu verriegeln, wobei derartige Verriegelungsmechanismen oftmals sehr aufwendig gestaltet sind.

Die DE 10 2007 022 638 A1 beschreibt eine Vorrichtung zur Blasformung von Behältern. Bei dieser Vorrichtung ist einer der Formträger unbeweglich und der andere Formträger verschwenkbar von einer Tragstruktur gehaltert und ein Bodenteil ist relativ zu jedem der beiden Formträger beweglich angeordnet, wobei das Bodenteil relativ zu den Formträgern eine Bewegungsbahn aufweist, die sowohl mit einer in einer Längsrichtung der Blasstation verlaufenden Komponente als auch mit einer quer zur Längsrichtung verlaufenden Komponente versehen ist. Diese Vorgehensweise beim Heranführen des Bodenteils an die Blasform ist jedoch relativ aufwendig.

Aus der EP 1 789 247 B1 ist ebenfalls eine Vorrichtung zur Blasformung von Behältern bekannt, wobei hier ebenfalls sowohl die Formträger als auch das Bodenteil mechanisch positionierbar angeordnet sind und die Formträger und das Bodenteil von einer gemeinsamen mechanischen Antriebseinrichtung permanent miteinander gekoppelt sind.

Die DE 100 2711 A1 beschreibt eine Blasform und ein Verfahren zum Schließen dieser Blasform. Dabei sind zwei Formhälften durch eine Verbindungsachse schwenkbar miteinander verbunden. Es ist eine Verschlusseinrichtung vorgesehen, um die beiden Formhälften zu schließen.

Die US 2008/0254161 A1 beschreibt eine Formvorrichtung zur Herstellung von thermoplastischen Behältnissen. Dabei ist eine Blasdüse vorgesehen, die sich in einer axialen Richtung bewegen kann und zwei Formhälften bilden die Blasform aus, die von einem geneigten Rand umgeben ist. Die Blasdüse selbst weist ein entsprechendes umgebendes Element auf, welches den oberen Teil der verschlossenen Blasform verriegelt.

Die US3694124 A offenbart die Merkmale des Oberbegriffs des Anspruchs 1.

Der vorliegenden Erfindung liegt die Aufgabe zugrunde, eine Vorrichtung zum Umformen von Kunststoffvorformlingen zu Kunststoffbehältnissen zur Verfügung zu stellen, welche in der Handhabung gegenüber dem Stand der Technik einfacher gestaltet ist. Daneben sollen verbesserte Verriegelungsmechanismen für Blasformen zur Verfügung gestellt werden.

Dies wird erfindungsgemäß durch den Gegenstand von Anspruch 1 erreicht. Vorteilhafte Ausführungsformen und Weiterbildungen sind Gegenstand der Unteransprüche.

Eine offenbarte Vorrichtung zum Umformen von Kunststoffvorformlingen zu Kunststoffbehältnissen weist wenigstens eine Blasform auf, wobei die Vorrichtung Verschlusselemente aufweist, die miteinander zusammenwirken, um die Blasform zwischen einem geöffneten Zustand und einem geschlossenen Zustand, in dem die Blasform einen Hohlraum ausbildet, innerhalb dessen die Kunststoffvorformlinge zu Kunststoffbehältnissen expandierbar sind, zu überführen. Dabei weisen diese Verschlusselemente wenigstens ein erstes Formteil und ein zweites Formteil auf, wobei das erste Formteil und das zweite Formteil zwischen der geschlossenen Stellung und der geöffneten Stellung bzgl. einander bewegbar sind. Weiterhin weisen die Verschlusselemente ein Bodenteil auf, welches gegenüber den Formteilen bewegbar ist, um den Hohlraum in einer Richtung abzuschließen. Erfindungsgemäß initiiert das Bodenteil bzw. eine Bewegung des Bodenteils wenigstens das Verschließen der Formteile und/oder das Verriegeln der Formteile in einem geschlossenen Zustand der Blasform.

Im Stand der Technik werden üblicherweise die Bewegungen der Formteile und des Bodenteils von unabhängigen Kurven angesteuert. Sofern eine Kopplung zwischen einer Bewegung der Formteile und des Bodenteils vorgesehen ist, werden dabei üblicherweise die Formteile angetrieben und eine Bewegung der Formteile führt durch eine Kopplung auch zu einer Bewegung des Bodenteils. Im Rahmen der ersten oben genannten Variante wird vorgeschlagen, dass nunmehr primär ein Antrieb des Bodenteils erfolgt und über diesen Antrieb ein Verschließen und/oder Verriegeln der Formteile stattfindet. Dabei macht sich die Offenbarung den Umstand zunutze, dass eine Ansteuerung der Bewegung des Bodenteils über Führungskurven mechanisch einfacher zu bewältigen ist als eine Bewegung der (beiden) Formteile.

Unter dem Bodenteil wird dasjenige Teil verstanden, welches in einem geschlossenen Zustand der Blasform den Hohlraum in Richtung eines Bodens des Behältnisses abgrenzt. Genauer gesagt liegt eine Mündung des Behältnisses in einer gegenüber dem Bodenteil entgegen gesetzten Richtung der Blasform.

Die Formteile umgeben das Behältnis in einem geschlossenen Zustand der Blasform in deren Umfangsrichtung. Vorzugsweise umgeben die Formteile das Behältnis in Umfangsrichtung vollständig und sind besonders bevorzugt symmetrisch zueinander ausgebildet.

Bevorzugt verriegelt das Bodenteil in einem geschlossenen Zustand die beiden Formteile miteinander.

Im Stand der Technik wird üblicherweise das Bodenteil beim Zusammenklappen der beiden Formteile gehalten und auf diese Weise wird das Bodenteil durch Verschließen der Formteile verriegelt. Es wird vorgeschlagen, diesen Vorgang derart zu gestalten, dass nunmehr das Bodenteil die beiden Formteile gegeneinander verriegelt, so dass ein Öffnen der Formteile bei angelegtem Bodenteil nicht möglich ist. Vorteilhaft ist die Blasform als Teil einer Blasstation an einem rotierenden Blasrad angeordnet. Dabei dreht sich dieses Blasrad bevorzugt im Arbeitsbetrieb kontinuierlich. Zum Bewegen der Verschlusselemente können beispielsweise stationär angeordnete Führungskurven eingesetzt werden. Es kann jedoch auch ein Bodenteil vorgesehen sein, welches zwar die Formteile nicht verriegelt, aber den Verschlussvorgang der Formteile bewirkt (etwa über eine geeignete Kopplung)

Bevorzugt können einige der stationären Führungskurven durch Kopplung mehrerer Verschlusselemente ersetzt werden. Hierbei eignet sich der Einsatz von einer Führungskurve für den Boden als einziges Ansteuerelement für die Verschlusselemente.

Besonders bevorzugt werden zur Kraftübertragung Pneumatik- oder Hydraulikzylinder eingesetzt, um auf stationäre Kurven für Verschlusselemente verzichten zu können. Dies ist besonders in Bezug auf aseptische Maschinen mit einem Reinraum von Vorteil, da auf eine Schmierung der stationären Kurven verzichtet werden kann.

Bevorzugt ist an einem Bodenteil eine Verriegelungseinrichtung angeordnet, welche in einem geschlossenen Zustand der Blasform die beiden Formteile miteinander verriegelt.

Vorteilhaft weist die Verriegelungseinrichtung eines erstes Verriegelungselement auf, welches in einem geschlossenen Zustand der Blasform das erste Formteil kontaktiert sowie ein zweites Verriegelungselement, welches in einem geschlossenen Zustand der Blasform das zweite Formteil kontaktiert. Vorzugweise sind diese beiden Verriegelungselemente starr gegenüber einander angeordnet. Auf diese Weise kann erreicht werden, dass durch einen kraftschlüssigen Halt zwischen den Verriegelungselementen und Abschnitten der Formteile diese gegenüber einander verriegelt werden.

Bei einer vorteilhaften Ausführungsform sind in einem geschlossenen Zustand der Blasform die beiden Formteile wenigstens abschnittsweise zwischen den beiden Verriegelungselementen angeordnet. Genauer gesagt ist ein unterer Abschnitt der Formteile zwischen den beiden Verriegelungselementen angeordnet, und die Formteile werden durch diese beiden Verriegelungselemente zusammen gedrückt. Insbesondere sind die beiden Abschnitte der Formteile in einer radialen Richtung der Blasform zwischen den beiden Verriegelungselementen angeordnet.

Vorzugsweise erweitert sich eine Kontaktfläche zwischen den Verriegelungselementen und den Formteilen in Richtung des Hohlraums. Auf diese Weise können Einführschrägen geschaffen werden, die ein Aufsetzen des Bodenteils an die beiden Formteile erleichtert.

Es wäre jedoch auch denkbar, dass die Verriegelungselemente gleichzeitig als Verschließelemente für die Formteile dienen. So könnten die Verriegelungselemente beispielsweise nach oben hin bzw. in Richtung der Formteile als ein sich erweiternder Konus ausgebildet sein, so dass durch eine Bewegung des Bodenteils auf die beiden Formteile zu auch die Verschließbewegung der Formteile erreicht bzw. initiiert wird.

Bei einer weiteren vorteilhaften Ausführungsform weist wenigstens ein Formteil in einem Kontaktbereich mit dem Bodenteil eine Schrägfläche auf. Vorteilhaft weisen beide Formteile in dem besagten Kontaktbereich mit dem Bodenteil eine Schrägfläche auf. Vorzugsweise ist die Schrägfläche kegelförmig ausgebildet.

Beide Formteile sind um eine parallel zu einer Längsrichtung verlaufende Achse schwenkbar und, wobei durch dieses Schwenken ein Schließen und Öffnen der Formteile erreicht wird.

Eine Bewegung des Bodenteils ist an eine Bewegung wenigstens eines Formteils gekoppelt. Zu diesem Zweck weist die Vorrichtung vorteilhaft eine Kopplungseinrichtung auf, welche eine Bewegung des Bodenteils wenigstens zeitweise mit einer Bewegung wenigstens eines Formteils koppelt.

Bei einer weiteren vorteilhaften Ausführungsform weist die Kopplungseinrichtung ein erstes Kopplungselement auf, welches das erste Formteil mit dem Bodenteil verbindet und zweites Kopplungselement, welches das zweite Formteil mit dem Bodenteil verbindet. Auf diese Weise wird eine besonders zuverlässige Kopplung erreicht.

Bevorzugt weist eine Kopplungseinrichtung zwischen Bodenteil und Formteil eine bewegbare Führungskurve auf, in der das Bodenteil in bevorzugt ständigem Eingriff mit dem Formteil steht, so dass große Belastungen und Schmierung dieser Kopplungseinrichtung vermieden werden.

Auf diese Weise ist es möglich, auf einzelne Führungskurven zu verzichten, da die besagten Bewegungen der Formteile und des Bodenteils aneinander gekoppelt sind.

Bei einer weiteren vorteilhaften Ausführungsform setzt die Kopplungseinrichtung eine Bewegung des Bodenteils in einer Längsrichtung der Blasform in eine Bewegung wenigstens eines Formteils in einer zu dieser Längsrichtung senkrecht stehenden Richtung um. Bei einer weiteren vorteilhaften Ausführungsform weist die Vorrichtung wenigstens eine pneumatische Antriebseinrichtung zum Bewegen des Bodenteils auf. Entsprechend könnte auch eine pneumatische Antriebseinrichtung zum Bewegen der Formteile eingesetzt werden.

Bei einer weiteren vorteilhaften Ausführungsform wird die Kopplung zwischen einem Formträger und dem Bodenteil nicht über eine horizontale Kurve vorgenommen, sondern über eine im Wesentlichen vertikale Kurve, da diese weniger problematisch bei der Einstellung der Formteile in der Montage ist.

Daneben können, wie erwähnt, eine vollständige Hauptkurve und eine entsprechend relativ aufwendige Ansteuerung am Formträger bzw. den Formteilen entfallen. Die Verriegelung wird hier, wie oben erwähnt, vorteilhaft durch eine Art Konus vorgenommen, der von unten in den Formträger, d. h. in die beiden Formteile eingreift und insbesondere auch an dem Bodenteil sitzt.

Zusätzlich können an einer konusartigen Fläche der Verriegelungselemente Rollen angebracht sein, die eine Reibung der Konusflächen minimieren. In der Verriegelungsposition der Verschlusselemente können Einrastungen für die Rollen oder für an den Verschlusselementen angebrachte Überstände an den Verschlusselemente angebracht sein, um die Verschlusselemente in der Verriegelungsposition zu halten. Ein Lösemechanismus, zum Beispiel eine Nocke, kann die Verriegelung im gewünschten Augenblick wieder aufheben.

Weiterhin wäre es denkbar, auch auf eine Bodenzentrierung zu verzichten, wenn entsprechende Kraftübertragungsmittel, welche die Bewegung der Formteile an die Bewegung des Bodenteils koppeln, genau ausgelegt sind. Falls zum Bewegen des Bodenteils ein pneumatisches Element, wie beispielsweise ein Pneumatikzylinder eingesetzt wird, ist es möglich, dass dieser Pneumatikzylinder lediglich auf eine Endstellung fährt bzw. auf eine Anschlagstellung an einem Hebel. Auf diese Weise ist eine Verminderung des Verschleißes möglich. Anstelle eines Pneumatikyzlinders wäre es jedoch auch möglich, Linearantriebe insbesondere elektromotorische Linearantriebe oder auch hydraulische Antriebe vorzusehen.

Die Vorrichtung weist weiterhin eine Blasdüseneinrichtung auf, welche gegenüber den Formteilen bewegbar ist und welche die Blasform in dem geschlossenen Zustand in einer Richtung abschließt. Auf diese Weise ist es möglich, dass die Blasdüseneinrichtung die beiden Formteile oben verschließt und das Bodenteil die Blasform von unten verschließt, so dass auf diese Weise vollständig auf Verschlussmittel für die Formteile verzichtet werden kann. Auf diese Weise kann auch auf eine Führungskurve zum Verriegeln der Formteile verzichtet werden. Vorteilhaft sind an den Formteilen Blasformsegmente angeordnet, gegen deren Innenwandung die Behältnisse expandiert werden.

Vorteilhaft ist auch eine Bewegung der Blasdüseneinrichtung an eine Bewegung des Bodenteils und/oder der Formteile gekoppelt. Bei einer weiteren vorteilhaften Ausführungsform verriegelt die Blasdüseneinrichtung in dem geschlossenen Zustand der Blasform die beiden Formteile miteinander.

Bei einer weiteren vorteilhaften Ausführungsform sind Bewegungen der Blasdüseneinrichtung wenigstens eines der Formteile und des Bodenteils aneinander gekoppelt. Auf diese Weise ist es möglich, auf eine weitere Führungskurve zu verzichten. In diese Kopplung kann gegebenenfalls auch noch eine Kopplung eines zusätzlichen Verriegelungselements für die Formteile einbezogen sein.

Die vorliegende Offenbarung ist weiterhin auf eine Anlage zum Behandeln von Behältnissen und insbesondere zum Umformen von Kunststoffvorformlingen zu Behältnissen gerichtet, wobei diese Anlage eine Vielzahl von Vorrichtungen bzw. Blasstationen der obigen Art aufweist, welche auch einen drehbaren Träger bzw. Blasrad angeordnet sind.

Daneben ist die vorliegende Offenbarung auch auf ein Verfahren zum Umformen von Kunststoffvorformlingen zu Kunststoffbehältnissen gerichtet, wobei Verschlusselemente wenigstens einer Blasform miteinander zusammenwirken, um die Blasform zwischen einem geöffneten Zustand und einem geschlossenen Zustand, in dem die Blasform einen Hohlraum ausbildet, innerhalb dessen die Kunststoffvorformlinge zu Kunststoffbehältnissen expandiert werden, zu überführen und wobei die Verschlusselemente wenigstens ein erstes Formteil und ein zweites Formteil umfassen, wobei das erste Formteil und das zweite Formteil zwischen der geschlossenen Stellung und der geöffneten Stellung bezüglich einander bewegt werden und in einem geschlossenen Zustand die Formteile miteinander verriegelt werden, und wobei die Verschlusselemente ein Bodenteil umfassen, welches gegenüber den Formteilen bewegt wird, um den Hohlraum in einer Richtung abzuschließen. Erfindungsgemäß initiiert
das Bodenteil wenigstens das Verschließen der Formteile und/oder das Verriegeln der Formteile in einem geschlossenen Zustand der Blasform.

Bevorzugt verriegelt das Bodenteil in einem geschlossenen Zustand die beiden Formteile miteinander.

Weitere Vorteile und Ausführungsformen ergeben sich aus den beigefügten Zeichnungen:
Darin zeigen:
- Fig. 1: eine schematische Darstellung einer erfindungsgemäßen Vorrichtung zum Umformen von Kunststoffbehältnissen;
- Fig. 2: eine schematische Teildarstellung einer erfindungsgemäßen Vorrichtung zum Expandieren von Behältnissen;
- Fig. 3: eine weitere Ausführungsform für eine erfindungsgemäße Vorrichtung;
- Fig. 4a - 4d: unterschiedliche Ausführungsformen für erfindungsgemäße Vorrichtungen;
- Fig. 5: eine Darstellung einer geöffneten Blasform; und
- Fig. 6a - 6g: diverse Darstellungen für Bewegungsmechanismen für die Bodenteile.

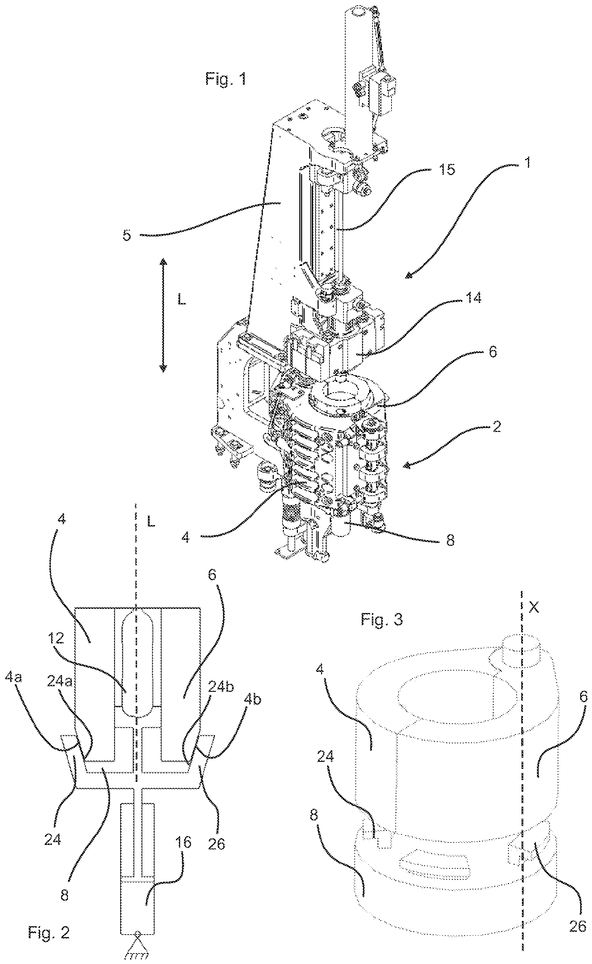

Fig. 1 zeigt eine perspektivische Darstellung einer erfindungsgemäßen Vorrichtung bzw. Blasstation zum Expandieren von Kunststoffvorformlingen zu Kunststoffbehältnissen. Diese Vorrichtung 1 weist eine Blasform auf, welche durch ein erstes Formteil 4 und ein zweites Formteil 6 gebildet wird. Dabei ist eines dieser Formteile 4,6 gegenüber dem anderen verschwenkbar, wobei hierzu insbesondere auch beide Formteile 4,6 verschwenkbar sein können.

Weiterhin ist ein (nur teilweise dargestelltes) Bodenteil 8 vorgesehen, welches die gesamte Blasform von unten her abschließt. Dabei ist eine Blasdüseneinrichtung 14 vorhanden, welche hier von oben auf die beiden Formteile 4,6 abgesenkt wird und welche eine Blasdüse zum Expandieren der Kunststoffvorformlingen zu Kunststoffbehältnissen enthält. Die Formteile 4, 6 stellen gemeinsam mit dem Bodenteil 8 und der Blasdüseneinrichtung 14 die Verschlusselemente für die Blasform dar.

Dabei ist es möglich, dass eine Vielzahl derartiger Blasstationen 1 an einem drehbaren Blasrad angeordnet ist. Der Einsatz der gezeigten Blasstationen ist jedoch auch bei Taktmaschinen denkbar. Das Bezugszeichen 15 bezieht sich auf eine Reckstange, welche zum Recken der Kunststoffvorformlinge dient. Eine Hubeinheit zum Bewegen der Blasdüseneinrichtung 14 ist dabei an einem Träger 5 angeordnet.

Fig. 2 zeigt eine schematische Teildarstellung der in Fig. 1 gezeigten Vorrichtung 1. Man erkennt hier wiederum die beiden Formteile 4 und 6, die in einem geschlossenen Zustand einen Hohlraum bzw. Aufnahmeraum 12 zur Aufnahme eines Behältnisses (nicht gezeigt) bilden. Dabei kennzeichnet das Bezugszeichen L die Längsrichtung des Behältnisses und hier auch der Vorrichtung. Das Bezugszeichen 8 kennzeichnet ein Bodenteil, welches hier mittels einer Antriebseinrichtung, wie einem Pneumatikzylinder 16, in Richtung der Achse L bewegt werden kann und welches in dem in Fig. 2 gezeigten geschlossenen Zustand die beiden Formteile 4 und 6 miteinander verriegelt. Genauer gesagt weist zu diesem Zweck das Bodenteil 8 zwei Verriegelungselemente 24 und 26 auf, die in einem geschlossenen Zustand die beiden Formteile 4 und 6 umklammern und aneinander drücken. Die beiden Formteile 4 und 6 weisen zu diesem Zweck Schrägflächen 4a und 6a auf, die mit entsprechenden sich von unten nach oben erweiternden Schrägflächen 24a, 26a an den Verriegelungselementen 24 und 26 zusammen wirken. Auf diese Weise werden durch eine Bewegung des Bodenteils von unten nach oben die beiden Formteile 4 und 6 aneinander gepresst und damit verriegelt. Ein Öffnen der Formteile ist hier erst nach Entfernung bzw. Absenken des Bodenteils möglich.

Die Fig. 3 zeigt eine weitere Ausführungsform für einen erfindungsgemäßen Verriegelungsmechanismus. Für diesen Mechanismus ist ein bajonettartiger Verschluss vorgesehen. Dabei ist es möglich, dass das Bodenteil 8 zunächst an die Formteile 4 und 6 herangefahren wird und anschließend gedreht wird. Durch dieses Drehen kommt es mit entsprechend ausgestalteten Innenbereichen der Formteile 4 und 6 zu einer Verriegelung der beiden Formteile 4 und 6 gegeneinander. Die beiden Verriegelungselemente 24 und 26, die hier an dem Bodenteil 8 angeordnet sind, hintergreifen dabei jeweils entsprechend ausgebildete (nicht gezeigte) Flächen innerhalb der beiden Formteile 4 und 6, um auf diese Weise die Verriegelung zu erreichen.

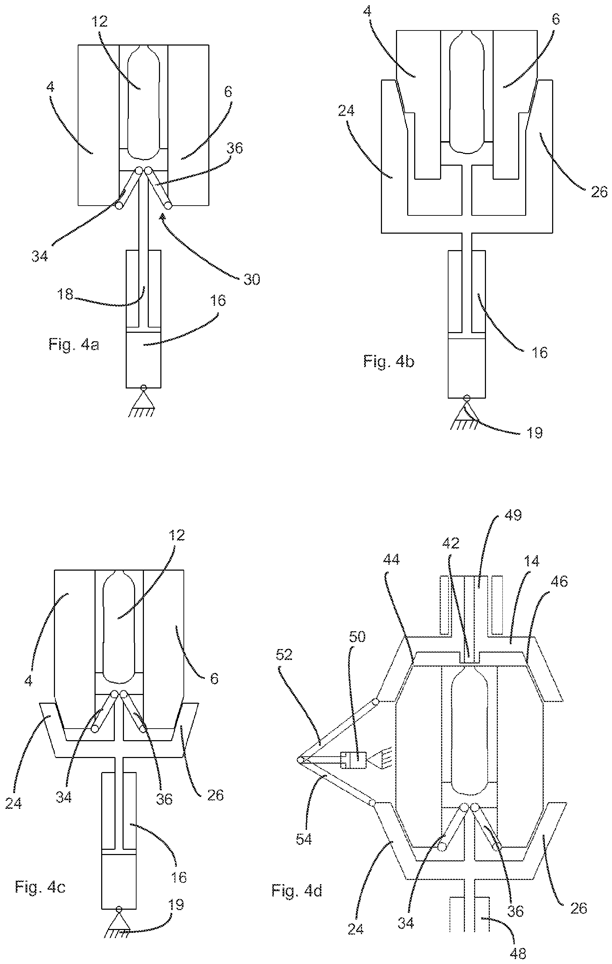

Fig. 4a zeigt schematisch eine Darstellung zur Veranschaulichung einer Kopplungseinrichtung 30 zwischen einem Bodenteil 8 und den beiden Formteilen 4 und 6. Bei dieser Ausführungsform sind ein erstes Kopplungselement 34 und ein zweites Kopplungselement 36 vorgesehen, wobei das erste Kopplungselement 34 das erste Formteil 4 bzw. eine Bewegung desselben an eine Bewegung des Bodenteils 8 koppelt. Das zweite Kopplungselement 36 koppelt eine Bewegung des zweiten Formteils 6 an das Bodenteil 8. Falls ausgehend von der in Fig. 4a gezeigten Stellung die Hubstange 18 abgesenkt wird, bewirken die beiden Kopplungselemente 34 und 36, dass die beiden Formhälften 4 und 6 auseinander gedrückt werden und auf diese Weise ein beispielsweise bereits hergestelltes Behältnis entnommen werden kann.

Fig. 4b zeigt weitere Darstellung einer erfindungsgemäßen Vorrichtung. Bei dieser Darstellung erstreckt sich ein Bestandteil eines Bodenteils 8 zwischen die beiden Formteile 4 und 6 und weiterer Bestandteil, der hier auch die beiden Verriegelungselemente 24 und 26 umfasst, umgibt die beiden Formteile 4 und 6 und presst sie aneinander. Auch auf diese Weise wird eine abdichtende Verbindung zwischen dem Bodenteil 8 und den beiden Formteilen 4 und 6 erreicht. Weiterhin wäre es auch möglich, dass an den Formteilen 4,6 und/oder auch dem Bodenteil Dichtungselemente aus einem flexiblen Material angeordnet sind, um bei entsprechendem Zusammenpressen eine günstige Abdichtung zu erreichen.

Fig. 4c zeigt eine weitere Ausführungsform einer erfindungsgemäßen Vorrichtung, wobei hier sowohl die Kopplung durch die beiden Kopplungselemente 34 und 36 dargestellt ist als auch die Verriegelung der beiden Formteile 4 und 6 durch die beiden Verriegelungselemente 24 und 26. Das Bezugszeichen 19 bezieht sich auf einen Lagerpunkt, an dem der Hydraulikzylinder 16 angeordnet ist.

Fig. 4d zeigt eine weitere Ausführungsform einer erfindungsgemäßen Vorrichtung, bei der auch die Bewegung einer Blasdüseneinrichtung 14 an die übrigen Bewegungen gekoppelt ist. Zu diesem Zweck ist hier ein Pneumatikzylinder 50 vorgesehen, der über zweite Kopplungselemente 52 und 54 bewirkt, dass das Bodenteil 8 und die Blasdüseneinrichtung 14 auseinander oder aufeinander zu bewegt werden. An das Bodenteil sind wiederum über die bereits oben beschriebenen ersten Kopplungselemente 34 und 36 die beiden Formteile 4 und 6 gekoppelt, so dass hier sämtliche Verschlusselemente miteinander gekoppelt sind und daher zum Ansteuern lediglich eine Kurve bzw. ein Pneumatikzylinder nötig ist. Es wäre jedoch auch möglich, zusätzlich oder anstelle des gezeigten Pneumatikzylinders 50 den auch in den oberen Figuren erwähnten Pneumatikzylinder 16 zum direkten Bewegen des Bodenteils 8 zu verwenden. Das Bezugszeichen 42 bezieht sich auf eine Blasdüse, um das Behältnis mit einem gasförmigen Medium und insbesondere Luft zu beaufschlagen.

Die Bezugszeichen 44, 46 kennzeichnen sich in Richtung der Formteile 4, 6 erweiternde Schrägflächen, um die Formteile gegeneinander zu verriegeln. Das Bodenteil 8 und die Blasdüseneinrichtung 14 werden mittels Linearführungen 48, 49 geführt.

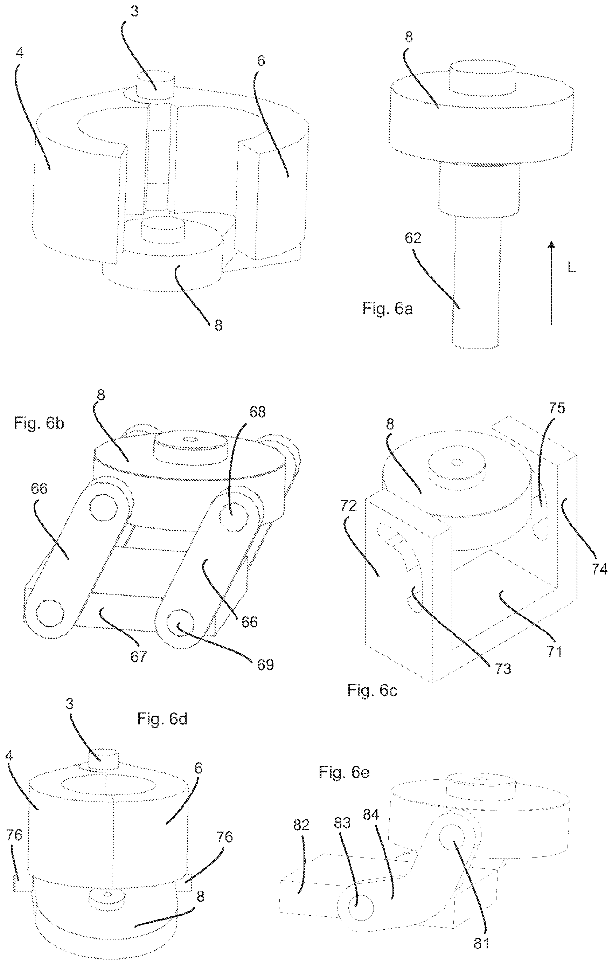

Fig. 5 zeigt eine weitere Darstellung zur Veranschaulichung einer erfindungsgemäßen Blasform. Auch hier ist ein Eingriff zwischen dem Bodenteil 8 und den beiden Formteilen 4 und 6 möglich, wobei, wie gezeigt die beiden Formteile 4 und 6 gegeneinander um eine Schwenkwelle 3 verschwenkbar sind.

Fig. 6a zeigt eine erste Ausführungsform zur Gestaltung einer Bewegung des Bodenteils 8. Hier ist ein Pneumatikzylinder 62 vorgesehen, der direkt das Bodenteil 8 in der in Fig. 1 gezeigten Längsrichtung bewegt. Vorzugsweise kann hier auch eine Gewindespindel (62) vorgesehen sein, die über ein Ansteuerelement angetrieben wird, wie z.B. eine Mutter.

Im Falle der in Fig. 6b gezeigten Ausführungsform wird zum Anheben des Bodenteils 8 ein Viergelenkmechanismus verwendet. Genauer gesagt sind hier vier Gelenkhebel 66 vorgesehen, die sowohl an einer Bodenplatte 67 über Gelenkwellen 69 angeordnet sind als auch an dem Bodenteil 8 über Gelenkwellen 68. In diesem Falle wird das Bodenteil 8 nicht nur angehoben, sondern auch seitwärts bewegt. Bei dem in Fig. 6c gezeigten Mechanismus ist ein Träger 71 vorgesehen, an dem zwei Seitenteile 72 und 74 angeordnet sind. In diesen Seitenteilen sind gekrümmte Nuten 73, 75 vorgesehen, welche ebenfalls eine Bewegung des Bodenteils 8 einerseits nach oben aber hier auch in weiteren Richtung ermöglichen. Die räumliche Orientierung des Bodenteils 8 wird vorzugsweise bei dieser Ausführungsform nicht verändert.

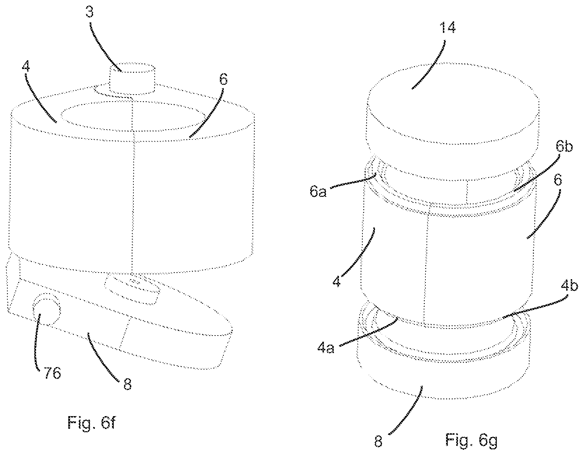

Bei den in den Fig. 6d und 6f gezeigten Ausführungsformen ist das Bodenteil 8 jeweils über eine Schwenkwelle 76 unterhalb der beiden Formteile 4 und 6 angelenkt und kann dabei um diese Welle 76 an die beiden Formteile 4 und 6 herangeklappt werden. Die Formteile 4 und 6 sind auch hier um ihre Schwenkwelle 73 gegeneinander verschwenkbar. Während sich bei der in Fig. 6d gezeigten Ausführungsform die Schwenkwelle 76 in dem Bereich beider Formteile 4 und 6 erstreckt, ist sie bei der in Fig. 6e gezeigten Ausführungsform in dem Bereich nur eines der beiden Formteile 4, 6 angeordnet.

Fig. 6e zeigt eine weitere Ausführungsform zur Veranschaulichung einer Bewegung des Bodenteils 8. Hier ist ein Schwungarm 84 vorgesehen, der an einer Trägerplatte 82 über eine Welle 83 und an dem Bodenteil 8 über eine Gelenkwelle 81 angeordnet ist.

Fig. 6g zeigt eine weitere Darstellung zur Veranschaulichung der Verriegelung. Man erkennt hier, dass die beiden Formteile 4 und 6 durch das Bodenteil 8 und die Blasdüseneinrichtung 14 verriegelt werden, wenn das Bodenteil 8 und die Blasdüseneinrichtung 14 aufeinander zu bewegt werden. Zu diesem Zweck sind auch hier wieder an den Formteilen Schrägflächen 4a, 4b, 6a, 6b vorgesehen, die eine Verriegelung der beiden Formteile 4 und 6 gegeneinander bewirken. Entsprechend weisen das Bodenteil 8 und auch die Blasdüseneinrichtung 14 entsprechende Schrägflächen auf, wobei hier lediglich die Schrägflächen 8a des Bodenteils dargestellt sind.

### Bezugszeichenliste

- 1: Vorrichtung
- 2: Blasform
- 3: Schwenkwelle
- 4: Formteil
- 4a, 4b: Schrägflächen
- 6a, 6b: Schrägflächen
- 5: Träger
- 6: Formteil
- 8: Bodenteil
- 12: Hohlraum bzw. Aufnahmeraum
- 14: Blasdüseneinrichtung
- 15: Reckstange
- 16: Pneumatikzylinder
- 18: Hubstange
- 19: Lagerpunkt
- 24, 26: Verriegelungselement
- 24a, 24b: Schrägflächen
- 30: Kopplungseinrichtung
- 34, 36: Kopplungselement
- 42: Blasdüse
- 44, 46: Schrägflächen
- 48, 49: Linearführung
- 52, 54: Kopplungselement
- 50: Pneumatikzylinder
- 62: Pneumatikyzlinder
- 66: Gelenkhebel 66
- 67: Bodenplatte
- 68: Gelenkwelle
- 69: Gelenkwelle
- 71: Träger
- 73, 75: Nuten
- 72, 74: Seitenteile
- 76: Schwenkwelle/Welle
- 81: Gelenkwelle
- 82: Trägerplatte
- 83: Welle
- 84: Schwungarm

- L: Längsrichtung, Achse

## Patentansprüche

1. Vorrichtung (1) zum Umformen von Kunststoffvorformlingen zu Kunststoffbehältnissen, mit wenigstens einer Blasform (2), wobei die Vorrichtung (1) Verschlusselemente (4, 6, 8, 14) aufweist, die miteinander zusammenwirken, um die Blasform zwischen einem geöffneten Zustand und einem geschlossenen Zustand, in dem die Blasform (2) einen Hohlraum (12) ausbildet, innerhalb dessen die Kunststoffvorformlinge zu Kunststoffbehältnissen expandierbar sind, zu überführen, wobei die Verschlusselemente (4, 6, 8, 14) wenigstens ein erstes Formteil (4) und ein zweites Formteil (6) umfassen, wobei das erste Formteil (4) und das zweite Formteil (6) zwischen der geschlossenen Stellung und der geöffneten Stellung bezüglich einander bewegbar sind und in einem geschlossenen Zustand die Formteile (4, 6) miteinander verriegelt sind, und wobei die Verschlusselemente (4, 6, 8, 14) ein Bodenteil (8) umfassen, welches gegenüber den Formteilen (4, 6) bewegbar ist, um den Hohlraum (12) in einer Richtung abzuschließen,
**dadurch gekennzeichnet, dass**
das Bodenteil (8) dazu eingerichtet und dafür vorgesehen ist, wenigstens das Verschließen der Formteile (4, 6) oder das Verriegeln der Formteile (4, 6) in einem geschlossenen Zustand der Blasform (2) zu initiieren, wobei die Formteile (4, 6) um eine parallel zu einer Längsrichtung (L) verlaufende Achse gegeneinander schwenkbar sind, und eine Bewegung des Bodenteils (8) an eine Bewegung wenigstens eines Formteils (4, 6) gekoppelt ist, und weiter wobei die Vorrichtung weiterhin eine Blasdüseneinrichtung (14) aufweist, welche gegenüber den Formteilen (4, 6) bewegbar ist, und welche die Blasform (2) in dem geschlossenen Zustand in einer Richtung abschließt.

2. Vorrichtung (1) nach Anspruch 1,
**dadurch gekennzeichnet, dass**
an dem Bodenteil (8) eine Verriegelungseinrichtung angeordnet ist, welche in einem geschlossenen Zustand der Blasform (2) die beiden Formteile (4, 6) miteinander verriegelt.

3. Vorrichtung (1) nach Anspruch 2,
**dadurch gekennzeichnet, dass**
die Verriegelungseinrichtung ein erstes Verriegelungselement (24) aufweist, welches in einem geschlossenen Zustand der Blasform (2) das erste Formteil (4) kontaktiert sowie ein zweites Verriegelungselement (26), welches in einem geschlossenen Zustand der Blasform (2) das zweite Formteil (6) kontaktiert.

4. Vorrichtung (1) nach Anspruch 3,
**dadurch gekennzeichnet, dass**
in dem geschlossenen Zustand der Blasform die beiden Formteile (4, 6) wenigstens abschnittsweise zwischen den beiden Verriegelungselementen (24, 26) angeordnet sind.

5. Vorrichtung (1) nach Anspruch 3 oder 4,
**dadurch gekennzeichnet, dass**
sich eine Kontaktfläche zwischen den Verriegelungselementen (24, 26) und den Formteilen (4, 6) in Richtung des Hohlraums (12) erweitert.

6. Vorrichtung (1) nach wenigstens einem der vorangegangenen Ansprüche,
**dadurch gekennzeichnet, dass**
wenigstens ein Formteil (4, 6) in einem Kontaktbereich mit dem Bodenteil (8) eine Schrägfläche aufweist.

7. Vorrichtung (1) nach zumindest einem der vorhergehenden Ansprüche,
**dadurch gekennzeichnet, dass**
eine Kopplungseinrichtung (30) ein erstes Koppelungselement (34) aufweist, welches das erste Formteil (4) mit dem Bodenteil (8) verbindet und ein zweites Kopplungselement (36) welches das zweite Formteil (6) mit dem Bodenteil verbindet.

8. Vorrichtung (1) nach Anspruch 7,
**dadurch gekennzeichnet, dass**
die Kopplungseinrichtung (30) eine Bewegung des Bodenteils (8) in einer Längsrichtung der Blasform (8) in eine Bewegung wenigstens eines Formteils (4, 6) in einer zu dieser Längsrichtung (L) senkrecht stehenden Richtung umsetzt.

9. Vorrichtung (1) nach wenigstens einem der vorangegangenen Ansprüche,
**dadurch gekennzeichnet, dass**
die Vorrichtung (1) eine pneumatische Antriebseinrichtung zum Bewegen des Bodenteils (8) aufweist.

10. Vorrichtung (1) nach Anspruch 8,
**dadurch gekennzeichnet, dass**
eine Bewegung der Blasdüseneinrichtung (14) an eine Bewegung des Bodenteils (8) gekoppelt ist.

11. Vorrichtung (1) nach Anspruch 8,
**dadurch gekennzeichnet, dass**
die Blasdüseneinrichtung in einem geschlossenen Zustand der Blasform (2) die beiden Formteile (4, 6) miteinander verriegelt.

12. Vorrichtung (1) nach Anspruch 8,
**dadurch gekennzeichnet, dass**
Bewegungen der Blasdüseneinrichtung, wenigstens eines Formteils (4, 6), und des Bodenteils (8) aneinander gekoppelt sind.

## Claims

1. An apparatus (1) for moulding plastic preforms into plastic containers, comprising at least one blow mould (2), wherein the apparatus (1) includes closure elements (4, 6, 8, 14) cooperating with each other in order to transfer the blow mould between an open condition and a closed condition, in which the blow mould (2) forms a cavity (12), within which the plastic preforms may be expanded into plastic containers, wherein the closure elements (4, 6, 8, 14) comprise at least one first mould section (4) and one second mould section (6), wherein the first mould section (4) and the second mould section (6) may be moved relative to one another between the closed position and the open position and are locked together in a closed condition of the mould sections (4, 6), and wherein the closure elements (4, 6, 8, 14) comprise a bottom section (8) which is moveable relatively to the mould sections (4, 6), in order to close the cavity (12) in one direction,
**characterised in that**
the bottom section (8) is intended for initiating at least the closing of the mould sections (4, 6) or the locking of the mould sections (4, 6) in a closed condition of the blow mould (2), wherein the mould sections (4, 6) may be pivoted relative to each other about an axis extending parallel to a longitudinal direction (L), and a movement of the bottom section (8) is coupled to a movement of at least one mould section (4, 6), and wherein furthermore the device includes a blow nozzle unit (14) which may be moved relatively to the mould sections (4, 6) and which closes the blow mould (2) in the closed condition in one direction.

2. The apparatus (1) as claimed in claim 1,
**characterised in that**
a locking device is disposed on the bottom section (8), which in a closed condition of the blow mould (2) locks the two mould sections (4, 6) together.

3. The apparatus (1) as claimed in claim 2,
**characterised in that**
the locking device has a first locking element (24) which in a closed condition of the blow mould (2) contacts the first mould section (4), as well as a second locking element (26) which in a closed condition of the blow mould (2) contacts the second mould section (6).

4. The apparatus (1) as claimed in claim 3,
**characterised in that**
in the closed condition of the blow mould, the two mould sections (4, 6) are disposed at least in sections between the two locking elements (24, 26).

5. The apparatus (1) as claimed in claim 3 or 4,
**characterised in that**
a contact surface widens out between the locking elements (24, 26) and the mould sections (4, 6) in the direction of the cavity (12).

6. The apparatus (1) as claimed in at least one of the preceding claims,
**characterised in that**
at least one mould section (4, 6) has a sloped surface in a contact area with the bottom section (8).

7. The apparatus (1) as claimed in at least one of the preceding claims,
**characterised in that**
a coupling unit (30) has a first coupling element (34) which connects the first mould section (4) to the bottom section (8), and a second coupling element (36) which connects the second mould section (6) with the bottom section.

8. The apparatus (1) as claimed in claim 7,
**characterised in that**
the coupling unit (30) translates a movement of the bottom section (8) in a longitudinal direction of the blow mould (8) into a movement of at least one mould section (4, 6) in a direction extending vertically to this longitudinal direction (L).

9. The apparatus (1) as claimed in at least one of the preceding claims,
**characterised in that**
the apparatus (1) has a pneumatic drive unit for moving the bottom section (8).

10. The apparatus (1) as claimed in claim 8,
**characterised in that**
a movement of the blow nozzle unit (14) is coupled to a movement of the bottom section (8).

11. The apparatus (1) as claimed in claim 8,
**characterised in that**
the blow nozzle unit locks the two mould sections (4, 6) together in a closed condition of the blow mould (2).

12. The apparatus (1) as claimed in claim 8,
**characterised in that**
movements of the blow nozzle unit, of at least one mould section (4, 6) and of the bottom section (8) are coupled to one another.

## Revendications

1. Dispositif (1) servant à mettre en forme des préformes en matière plastique en des récipients en matière plastique, avec au moins un moule de soufflage (2), dans lequel le dispositif (1) présente des éléments de fermeture (4, 6, 8, 14), qui coopèrent les uns avec les autres pour transférer le moule de soufflage entre un état ouvert et un état fermé, dans lequel le moule de soufflage (2) réalise un espace creux (12), à l'intérieur duquel les préformes en matière plastique peuvent être expansées en des récipients en matière plastique, dans lequel les éléments de fermeture (4, 6, 8, 14) comprennent au moins une première partie de moule (4) et une seconde partie de moule (6), dans lequel la première partie de moule (4) et la seconde partie de moule (6) peuvent être déplacées l'une par rapport à l'autre entre la position fermée et la position ouverte et les parties de moule (4, 6) sont verrouillées entre elles dans un état fermé, et dans lequel les éléments de fermeture (4, 6, 8, 14) comprennent une partie de fond (8), laquelle peut être déplacée par rapport aux parties de moule (4, 6) afin de fermer hermétiquement l'espace creux (12) dans un sens,
**caractérisé en ce que**
la partie de fond (8) est mise au point et prévue pour initier au moins la fermeture des parties de moule (4, 6) ou le verrouillage des parties de moule (4, 6) dans un état fermé du moule de soufflage (2), dans lequel les parties de moule (4, 6) peuvent pivoter l'une à l'encontre de l'autre autour d'un axe s'étendant de manière parallèle par rapport à un sens longitudinal (L), et un déplacement de la partie de fond (8) est couplé à un déplacement d'au moins une partie de moule (4, 6), et par ailleurs dans lequel le dispositif présente par ailleurs un système de buse de soufflage (14), lequel peut être déplacé par rapport aux parties de moule (4, 6) et lequel ferme hermétiquement le moule de soufflage (2) dans l'état fermé dans un sens.

2. Dispositif (1) selon la revendication 1,
**caractérisé en ce que**
est disposé au niveau de la partie de fond (8) un système de verrouillage, lequel verrouille entre elles les deux parties de moule (4, 6) dans un état fermé du moule de soufflage (2).

3. Dispositif (1) selon la revendication 2,
**caractérisé en ce que**
le système de verrouillage présente un premier élément de verrouillage (24), lequel entre en contact, dans un état fermé du moule de soufflage (2), avec la première partie de moule (4), ainsi qu'un second élément de verrouillage (26), lequel entre en contact, dans un état fermé du moule de soufflage (2), avec la seconde partie de moule (6).

4. Dispositif (1) selon la revendication 3,
**caractérisé en ce que**
dans l'état fermé du moule de soufflage, les deux parties de moule (4, 6) sont disposées au moins par endroits entre les deux éléments de verrouillage (24, 26).

5. Dispositif (1) selon la revendication 3 ou 4,
**caractérisé en ce que**
une surface de contact s'élargit entre les éléments de verrouillage (24, 26) et les parties de moule (4, 6) dans le sens de l'espace creux (12).

6. Dispositif (1) selon au moins l'une quelconque des revendications précédentes,
**caractérisé en ce que**
au moins une partie de moule (4, 6) présente, dans une zone de contact avec la pièce de fond (8), une surface oblique.

7. Dispositif (1) selon au moins l'une quelconque des revendications précédentes,
**caractérisé en ce que**
un système de couplage (30) présente un premier élément de couplage (34), lequel relie la première partie de moule (4) à la partie de fond (8), et un second élément de couplage (36), lequel relie la seconde partie de moule (6) à la partie de fond.

8. Dispositif (1) selon la revendication 7,
**caractérisé en ce que**
le système de couplage (30) transforme un déplacement de la partie de fond (8) dans un sens longitudinal du moule de soufflage (8) en un déplacement d'au moins une partie de moule (4, 6) dans un sens perpendiculaire par rapport audit sens longitudinal (L).

9. Dispositif (1) selon au moins l'une quelconque des revendications précédentes,
**caractérisé en ce que**
le dispositif (1) présente un système d'entraînement pneumatique servant à déplacer la partie de fond (8).

10. Dispositif (1) selon la revendication 8,
**caractérisé en ce que**
un déplacement du système de buse de soufflage (14) est couplé à un déplacement de la partie de fond (8).

11. Dispositif (1) selon la revendication 8,
**caractérisé en ce que**
le système de buse de soufflage verrouille entre elles les deux parties de moule (4, 6) dans un état fermé du moule de soufflage (2).

12. Dispositif (1) selon la revendication 8,
**caractérisé en ce que**
des déplacements du système de buse de soufflage, d'au moins une partie de moule (4, 6) et de la partie de fond (8) sont couplés les uns aux autres.
